# FASCICULE DE BREVET EUROPEEN

(11) **EP 1 952 309 B1**
(45) Date de publication et mention de la délivrance du brevet: **25.05.2016**
(21) Numéro de dépôt: 06831883.1
(22) Date de dépôt: 15.11.2006
(51) Int. Cl.: G06K 19/04

(54) **RECIPIENT METALLIQUE COMPRENANT UN TRANSPONDEUR**
METALLBEHÄLTER MIT EINEM TRANSPONDER
METAL CONTAINER COMPRISING A TRANSPONDER

(30) Priorité: 15.11.2005 WO PCT/IB2005/053771
(43) Date de publication de la demande: 06.08.2008
(73) Titulaire: IDtek Track-and-Trace S.A., 1003 Lausanne (CH)
(72) Inventeur: SCHNELL, Markus, 82140 Olching (DE); ZIELASCH, Andreas, D-82256 Fürstenfeldbruck (DE)
(74) Mandataire: Weihs, Bruno Konrad
(86) Numéro de dépôt international: PCT/IB2006/054276
(87) Numéro de publication internationale: WO 2007/057847

(56) Documents cités:
- EP-A- 1 156 266
- EP-A1- 0 672 859

## Description

### Domaine de l'invention

La présente invention concerne les applications liées à l'identification par radio fréquence que l'on cite souvent au moyen de son abréviation anglaise RFID (Radio Frequency IDentification). Elle se situe plus précisément dans le domaine de l'identification d'objets métalliques.

### Etat de la technique

La technologie RFID permet d'identifier des objets ou des personnes en utilisant une puce mémoire ou un dispositif électronique capable, à l'aide d'une antenne radio, de transmettre des informations à un lecteur communément nommé lecteur RFID. Dans le texte qui suit, on nommera "transpondeur" ce dispositif électronique.

Un problème peut se produire lorsque le transpondeur doit être associé à un objet métallique. Dans ce cas, le fonctionnement du transpondeur et sa lecture peuvent être perturbés à cause de l'existence de la masse métallique avoisinante qui est identifiée par le transpondeur.

Ce problème est particulièrement évident lorsque l'objet métallique est une bouteille de gaz, un objet typiquement en métal.

De plus, si le transpondeur se trouve placé à proximité de la valve, c'est-à-dire d'une importante masse métallique, son disfonctionnement est encore plus accentué.

Il existe donc un besoin de pouvoir utiliser efficacement des transpondeurs sur de tels objets métalliques, comme une bouteille de gaz, sans que leur fonctionnement ne soit perturbé, ou alors que la perturbation soit minime.

A titre d'exemple, la demande WO 2006/075309, décrit un dispositif pour l'interrogation de transpondeurs disposés sur un objet métallique ou non, par exemple une bouteille de gaz, à partir de n'importe quel point situé sur le pourtour de l'objet.

Dans un mode d'exécution de cette publication, on trouve un conteneur métallique ou non, par exemple une bouteille de gaz, avec un épaulement, et un col, ledit col étant surmonté par une vanne, elle-même pouvant être recouverte d'un couvercle. Les documents EP 1 156 266 et EP 0 672 859 décrivent un conteneur métallique comportant un transpondeur placé sur la partie convexe du conteneur.

Dans le mode décrit, un transpondeur de type "metal rod", connu en lui-même dans l'état de la technique, est fixé sur le col. Par "metal rod", on entend un transpondeur formé d'un bobinage qui entoure un barreau métallique, p.ex. en ferrite, le tout étant de préférence encapsulé dans du verre

Un fil conducteur, jouant le rôle d'une antenne, forme une boucle autour du col. Autour du transpondeur, le fil forme un enroulement spiralé. Le fil conducteur est également fixé à la bouteille. De préférence, le fil conducteur et le transpondeur sont logés dans une protection plastique (non illustrée).

Il n'y a pas de contact mécanique entre l'enroulement spiralé et le transpondeur. Cependant, ces deux éléments étant relativement proches, un signal électromagnétique peut être transmis d'un élément à l'autre par effet inductif.

Il est dès lors possible d'interroger le transpondeur en disposant un lecteur, voire son antenne si celle-ci est distante du lecteur, à proximité du fil conducteur, en un endroit relativement éloigné du transpondeur.

Un inconvénient de la disposition proposée dans cette publication réside dans la position de l'antenne sur la bouteille. En effet, le fil conducteur entoure notamment le col, un élément de la bouteille qui est fréquemment saisi (soit manuellement soit mécaniquement) pour déplacer une bouteille qui pèse un certain poids. Ainsi, le fil peut rapidement et facilement être endommagé voire rompu ce qui rend le transpondeur inutilisable.

En conséquence, les solutions proposées par cette publication peuvent être très délicates à mettre en oeuvre dans certaines circonstances et pour certains objets, en particulier quand on considère l'emplacement du fil conducteur qui est prôné dans ce document.

Une autre solution similaire est décrite dans la publication EP 0 586 083, solution qui présente le même défaut que celle de WO 2006/075309.

Un autre système est décrit dans DE 199 11 032. Dans ce système, on introduit le transpondeur dans un élément de protection de la vanne afin d'éviter une exposition risquée du transpondeur. Dans ce cas, le transpondeur est en fait placé dans un logement réalisé dans l'élément de protection, soit à la base dudit élément, soit sur la partie supérieure de l'élément. Une fois le transpondeur en place et l'antenne posée de façon à entourer l'élément de protection, un couvercle est prévu pour maintenir le tout en place.

La publication DE 199 11 034 montre un autre système de marquage de bouteilles dans lequel on cherche à protéger le système de marquage de son endommagement. Dans ce document, on utilise un anneau en deux parties qui contiendront le transpondeur et son antenne. L'anneau est ensuite attaché à la bouteille, par exemple sur le col de celle-ci. Cette solution impose donc l'emploi d'une pièce additionnelle qui se monte sur la bouteille. Cela évidemment implique un surcoût dans la production et un problème de compatibilité: il peut être impossible de produire des anneaux standards qui s'adaptent à tous les types de bouteilles. Il faut donc créer un stock de tels anneaux, et aussi produire des antennes de tailles différentes pour les transpondeurs, afin qu'elles puissent se monter dans différents anneaux, s'ils ont des diamètres différents.

Comme on peut aisément le comprendre, les principes exposés dans ces publications de l'état de la technique souffrent toutes d'un défaut commun: la taille de l'antenne est liée au diamètre d'une partie de la bouteille puisque l'antenne entoure cette partie de la bouteille. En conséquence, il est nécessaire de produire des antennes de différentes tailles qui d'adaptent aux tailles correspondantes des parties de bouteille: une standardisation des antennes/transpondeurs est donc difficile voire impossible.

La publication US 6,475,443 décrit un autre système de récipient pouvant contenir des matières chimiques. Dans cette publication, le transpondeur est intégré dans le récipient par exemple dans un logement idoine. Le désavantage d'une telle solution est que le récipient doit être fabriqué en conséquence avec un tel logement. Ainsi, l'on ne peut pas réutiliser des récipients existants pour les combiner avec un transpondeur, au cours de la durée de vie du récipient.

### Exposé général de l'invention

Le but de la présente invention est donc d'améliorer les dispositifs connus.

Plus précisément, le problème que la présente invention se propose de résoudre est une amélioration de la lecture de transpondeurs placés sur des objets métalliques, selon les revendications 1-5.

Un autre but de la présente invention est de proposer un système fiable et qui ne puisse pas facilement être endommagé.

Un autre but de l'invention est de proposer un système qui puisse se monter facilement sur des bouteilles existantes et qui puisse se standardiser.

Dans l'invention, la solution au problème précité de l'influence du métal sur les performances du transpondeur est de disposer le transpondeur sur le récipient métallique cylindrique que l'on cherche à identifier de manière à ce que la distance de lecture du transpondeur soit supérieure à celle observée lorsque le transpondeur se trouve en l'air libre, c'est-à-dire sans la présence d'une masse métallique à proximité.

Dans un mode de réalisation préféré de l'invention , le récipient métallique est cylindrique et présente une face supérieure convexe, une valve étant disposée dans la partie centrale de la face supérieure. Le transpondeur a la forme d'un bâtonnet, est placé sur et à proximité de la face supérieure et est orienté selon une direction essentiellement radiale.

De manière surprenante, on a constaté qu'en positionnant le transpondeur comme indiqué dans l'alinéa précédent, une très bonne qualité et distance de lecture pouvaient être obtenues.

Inversement, si le transpondeur est trop éloigné de la face supérieure du récipient et/ou selon une direction qui n'est pas essentiellement radiale, la qualité et/ou la distance de lecture sont considérablement diminuées.

Par "à proximité de la face supérieure", on entend une distance de préférence inférieure à 10 mm.

L'on peut donc soit fixer directement le transpondeur sur la surface de la face supérieure, ou alors, dans une variante, prévoir une partie formant support sur lequel le transpondeur est fixé.

Par "essentiellement radiale", on entend que l'orientation du transpondeur n'est pas nécessairement exactement selon une direction radiale mais selon une direction dont la distance angulaire peut varier de - 45° à + 45° par rapport à la direction radiale.

Il convient cependant de relever que si la direction est exactement radiale (distance angulaire = 0°) et si la distance entre le transpondeur et la face supérieure est nulle, la distance de lecture est maximale. Suivant la géométrie de la bouteille, dans ce cas, la distance de lecture peut être d'au moins 20 cm.

D'autre part, une telle position est favorable pour protéger le transpondeur en lui-même lorsqu'il est monté sur la bouteille. On évite également d'entourer la bouteille avec un fil et il est facile de monter des transpondeurs d'un modèle unique sur des bouteilles différentes, d'où une standardisation possible des transpondeurs qui est indépendante de la taille des bouteilles.

L'invention sera mieux comprise par la description de modes d'exécution de celle-ci et des figures qui s'y rapportent, dans lesquelles:
La figure 1 montre une vue schématique générale d'un récipient, par exemple une bouteille de gaz, avec un transpondeur.
La figure 2 montre une vue schématique de dessus d'un récipient selon la figure 1.
La figure 3 montre une vue schématique de dessus de zone particulière du récipient.
La figure 4 montre une vue en coupe schématique de côté du récipient selon l'invention.
La figure 5 illustre une variante de moyens de fixation du transpondeur

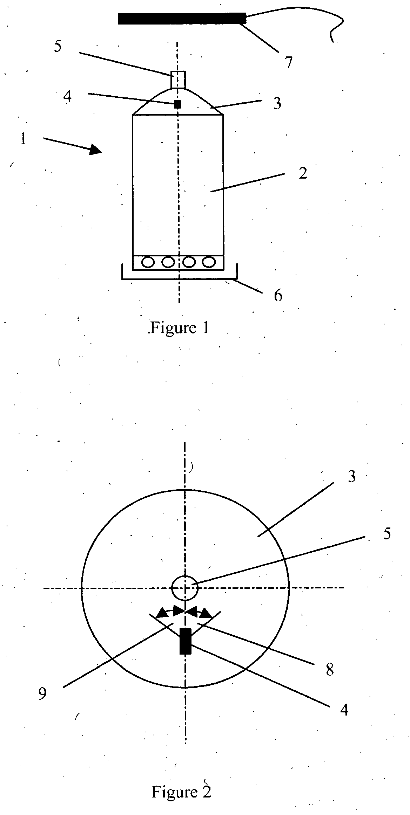

Dans la figure 1, le récipient 1 schématisé, par exemple une bouteille de gaz, comporte un corps 2, avec un dôme 3 sur lequel est fixé un transpondeur 4. Au sommet du dôme 3, on trouve des moyens d'ouverture du récipient 5 (par exemple une vanne). Le récipient est posé sur un convoyeur 6, par exemple un convoyeur à chaînes connu de l'état de la technique. Au-dessus du récipient 1 on trouve une antenne 7 qui permet la lecture du transpondeur 4, comme il est connu dans le domaine des RFID.

La figure 2 illustre de façon schématique un récipient 1 vu de dessus. On aperçoit donc principalement le dôme 3 et la vanne 5. Le transpondeur 4 est représenté dans une position exactement radiale. Toutefois, le transpondeur peut être aligné selon des directions qui forment un angle par rapport à la direction radiale, mais de préférence il est orienté au maximum selon un angle de +/- 45° par rapport à la direction radiale. Les secteurs correspondants à cette alignements angulaires de +/- 45° sont référencés 8 et 9 dans la figure 2.

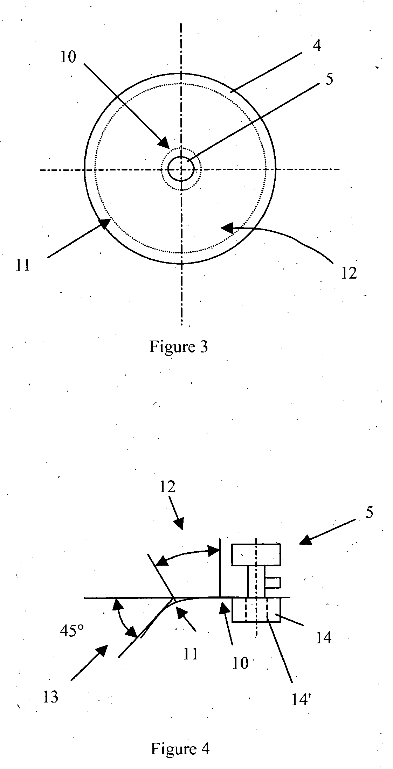

La figure 3 illustre, comme la figure 2, de façon schématique une vue de dessus du récipient 1. Dans cette figure, l'on a représenté une première limite en traits pointillés qui correspond à la zone dans laquelle une bride 14 a été soudée à la paroi du dôme 3. Cette bride porte un filetage 14' sur lequel la vanne 5 vient ensuite se visser lors de son montage sur le récipient.

La deuxième limite 11 illustrée en traits pointillés correspond à la zone d'inclinaison à 45° par rapport à l'horizontale du dôme 3. Ces deux limites permettent de définir une région 12 dans laquelle le transpondeur est placé pour un fonctionnement optimal.

Ces limites 10, 11 et la région 12 sont également représentées dans la figure 4 en vue de côté. Plus précisément, la zone d'inclinaison à 45° est référencée 13 dans la figure 4 et est définie entre une ligne horizontale passant perpendiculairement à la vanne et une ligne orientée à 45° par rapport à cette ligne horizontale et qui suit la pente du dôme 3.

Dans la région 12, le transpondeur est ensuite orienté selon une direction essentiellement radiale, selon l'enseignement donné ci-dessus de la présente invention.

Un des avantages offerts par la présente invention réside dans le fait que la lecture du transpondeur est également possible sur des bouteilles dépourvues de couronne ou d'anneau disposés sur la face supérieure.

Un autre avantage offert par la présente invention est d'ordre économique. En effet, le récipient ne doit pas être modifié, p.ex. par création d'une cavité destinée à recevoir et/ou retenir le transpondeur, ce dernier peut simplement être collé sur la face supérieure du récipient. Alternativement, un support de protection du transpondeur peut être collé sur la face supérieure du récipient.

Il convient par ailleurs de noter que dans le cadre de la présente invention, on utilise la surface métallique du récipient comme amplificateur du champ magnétique induit par le lecteur-émetteur RFID. Ainsi, le signal de réponse du transpondeur peut être lu à une distance plus grande qu'en l'absence de la surface métallique avoisinante.

De préférence, le transpondeur utilisé est du type basse-fréquence, typiquement légèrement inférieure à 134 kHz.

De manière générale, la présente invention permet de lire les transpondeurs à une distance relativement importante. Il devient dès lors possible de faire défiler des récipients de hauteurs différentes sous un lecteur, respectivement une antenne RFID, dont la position reste fixe. En effet, si la distance de lecture était très faible, le défilement de récipients de hauteurs différentes nécessiterait l'utilisation d'un lecteur RFID dont la hauteur varie en fonction de la hauteur du récipient qui doit être lu.

Le transpondeur peut être fixé directement sur la surface du dôme (par collage ou autre moyen équivalent) ou alors on peut prévoir un support orienté sur la surface dôme qui faciliterait la fixation et l'orientation du transpondeur. A titre d'exemple, l'on peut aligner le transpondeur sur une poignée du récipient 1.

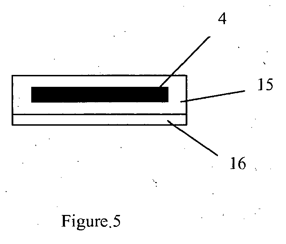

Selon un autre variante, le transpondeur 4 peut être intégré dans un élément porteur servant à la fois comme protection mécanique dudit transpondeur et de fixation sur le récipient. Cette variante permet la production indépendante de transpondeurs qui peuvent ensuite être montés directement sur un récipient sans qu'il soit nécessaire de prévoir ensuite des étapes de production additionnelles pour protéger le transpondeur. Cette variante est illustrée à la figure 5, dans laquelle on trouve un transpondeur 4 noyé dans un élément de protection 15 (par exemple en plastique), ledit élément 15 étant attaché à des moyens de fixation 16, par exemple de la colle, de la bande collante double-face ou tout autre moyen équivalent.

Les modes d'exécution donnés ci-dessus le sont à titre d'exemples non-limitatifs et d'autres variantes utilisant des moyens équivalents sont possibles.

## Revendications

1. Ensemble comprenant un récipient métallique cylindrique (1), p.ex. une bouteille de gaz, et un transpondeur (4) en forme de bâtonnet, ledit récipient comprenant une face supérieure convexe (3) et comportant en son centre une valve métallique (5), **caractérisé en ce que** le transpondeur (4) se situe sur la face supérieure (3), la distance entre le transpondeur (4) et la surface de la face supérieure (3) étant environ égale à 10 mm ou inférieure à cette valeur, le transpondeur est orienté selon une direction essentiellement radiale de la face convexe (3), et le transpondeur (4) est intégré dans un élément porteur (15) servant de protection mécanique et de fixation sur le récipient (1).

2. Ensemble selon la revendication 1, dans lequel l'orientation du transpondeur (4) est selon une direction dont la distance angulaire varie de - 45° à + 45° (8,9) par rapport à la direction radiale.

3. Ensemble selon l'une des revendications précédentes, dans lequel le transpondeur (4) est aligné sur une partie de poignée du récipient (1).

4. Ensemble selon l'une des revendications précédentes, dans lequel le transpondeur est placé dans une zone (12) définie d'un côté par la limite de soudure (10) d'une bride (14) au dôme (3), ladite bride portant un filetage dans lequel se visse la vanne (5), et de l'autre côté par la limite (11) de la zone d'inclinaison à 45° de la paroi du dôme (3) par rapport à l'horizontale.

5. Ensemble selon l'une des revendications précédentes où le transpondeur (4) est du type basse-fréquence.

## Patentansprüche

1. Einheit, die einen zylindrischen Metallbehälter (1), z.B. eine Gasflasche, und einen stabförmigen Transponder (4) enthält, wobei der Behälter eine konvexe Oberfläche (3) enthält und in seiner Mitte ein metallisches Ventil (5) aufweist, **dadurch gekennzeichnet, dass** der Transponder (4) sich an der Oberseite (3) befindet, wobei der Abstand zwischen dem Transponder (4) und der Fläche der Oberseite (3) etwa gleich 10 mm oder geringer als dieser Wert ist, der Transponder gemäß einer im Wesentlichen radialen Richtung der konvexen Seite (3) ausgerichtet ist, und der Transponder (4) in ein Trägerelement (15) integriert ist, das als mechanischer Schutz und zur Befestigung am Behälter (1) dient.

2. Einheit nach Anspruch 1, wobei die Ausrichtung des Transponders (4) gemäß einer Richtung liegt, deren Winkelabstand von - 45° bis + 45° (8, 9) bezüglich der radialen Richtung variiert.

3. Einheit nach einem der vorhergehenden Ansprüche, wobei der Transponder (4) mit einem Teil des Griffs des Behälters (1) fluchtend ausgerichtet ist.

4. Einheit nach einem der vorhergehenden Ansprüche, wobei der Transponder in einer Zone (12) angeordnet ist, die einerseits durch die Schweißgrenze (10) eines Flanschs (14) an der Kuppel (3), wobei der Flansch ein Gewinde trägt, in das das Ventil (5) geschraubt wird, und andererseits durch die Grenze (11) der Neigungszone um 45° der Wand der Kuppel (3) bezüglich der Waagrechten definiert wird.

5. Einheit nach einem der vorhergehenden Ansprüche, wobei der Transponder (4) von der Art Niederfrequenz ist.

## Claims

1. Assembly comprising a cylindrical metal container (1), e.g. a gas cylinder, and a transponder (4) in the form of a stick, said container comprising a convex top face (3) and comprising, at its centre, a metal valve (5), **characterized in that** the transponder (4) is situated on the top face (3), the distance between the transponder (4) and the surface of the top face (3) being approximately equal to 10 mm or less than this value, the transponder is oriented in an essentially radial direction from the convex face (3), and the transponder (4) is incorporated in a supporting element (15) serving as mechanical protection and fixing onto the container (1).

2. Assembly according to Claim 1, in which the orientation of the transponder (4) is in a direction for which the angular distance varies from -45° to +45° (8, 9) relative to the radial direction.

3. Assembly according to one of the preceding claims, in which the transponder (4) is aligned on a handle part of the container (1).

4. Assembly according to one of the preceding claims, in which the transponder is placed in a zone (12) defined on one side by the limit of welding (10) of a flange (14) to the dome (3), said flange bearing a threading into which the valve (5) is screwed, and on the other side by the limit (11) of the area of 45° inclination of the wall of the dome (3) relative to the horizontal.

5. Assembly according to one of the preceding claims, in which the transponder (4) is of the low-frequency type.
